# EUROPÄISCHE PATENTSCHRIFT

(11) **EP 4 004 697 B1**
(45) Veröffentlichungstag und Bekanntmachung des Hinweises auf die Patenterteilung: **23.08.2023**
(21) Anmeldenummer: 21720209.2
(22) Anmeldetag: 15.04.2021
(51) Int. Cl.: G05G 9/047, G05G 5/05, B60K 37/06, G06F 3/01, G06F 3/0338

(54) **STEUEREINRICHTUNG ZUR STEUERUNG VON FAHRZEUGFUNKTIONEN**
CONTROL DEVICE FOR CONTROLLING VEHICLE FUNCTIONS
DISPOSITIF DE COMMANDE POUR COMMANDER DES FONCTIONS D'UN VÉHICULE

(30) Priorität: 07.05.2020 DE 102020002741
(43) Veröffentlichungstag der Anmeldung: 01.06.2022
(73) Patentinhaber: Mercedes-Benz Group AG, 70372 Stuttgart (DE)
(72) Erfinder: HANUSCHKIN, Alexander, 71263 Weil der Stadt (DE); ETTER, Florian, 73734 Esslingen (DE)
(74) Vertreter: Novagraaf Group
(86) Internationale Anmeldenummer: PCT/EP2021/059806
(87) Internationale Veröffentlichungsnummer: WO 2021/223973

(56) Entgegenhaltungen:
- EP-A1- 3 671 718
- EP-A1- 3 916 523
- EP-A2- 0 938 035
- KR-A- 20170 129 012
- US-A1- 2012 249 412
- US-A1- 2016 018 843
- US-A1- 2017 322 585
- US-B2- 10 061 400

## Beschreibung

Die Erfindung betrifft Steuereinrichtung zur Steuerung von Fahrzeugfunktionen nach der im Oberbegriff von Anspruch 1 näher definierten Art. Außerdem betrifft die Erfindung ein Verfahren zur Steuerung von Fahrzeugfunktionen mit einer solchen Steuereinrichtung.

Steuereinrichtungen zur Steuerung von Fahrzeugfunktionen sind soweit aus dem Stand der Technik bekannt. Sehr häufig wird als Steuereinrichtung ein Bedienfeld mit berührungssensitiven Flächen, Tastern, Drehknöpfen und/oder dergleichen eingesetzt. Dies ist relativ aufwändig für die das Fahrzeug bedienende Person, da sie ihre Hand ständig zu dem notwendigen Bedienelement bewegen muss. Daher ist es aus dem allgemeinen Stand der Technik ebenfalls bekannt, eine Steuereinrichtung über ein weitgehend ortsfestes aber bewegliches Objekt auszubilden, welches von der Person zur Steuerung aktiv betätigt werden kann. Ein solches Objekt kann beispielsweise ein Joystick, ein Trackball oder dergleichen sein. Dabei sind verschiedene Ausgestaltungen denkbar, beispielsweise indem ein Drehknopf so gelagert wird, dass zusätzlich zur Drehung eine Bewegung zumindest nach vorn und hinten sowie nach rechts und nach links möglich ist. Außerdem kann durch ein Drücken auf den Drehknopf beispielsweise eine Auswahl bestätigt werden. Über eine solche Steuereinrichtung kann dann beispielsweise innerhalb von Menüs in einem Multifunktionsdisplay eine entsprechende Auswahl getroffen werden, es besteht eine rudimentäre Möglichkeit Texte einzugeben, Funktionen auszuwählen und dergleichen. Eine Steuereinrichtung im Sinne der hier vorliegenden Erfindung kann aber auch ein Lenkrad, ein Pedal oder dergleichen sein.

Die US 10 061 400 B2 offenbart ein Eingabegerät umfassend ein Eingabemodul mit einem Befestigungselement Das Eingangsmodul weist eine Kugel mit einer im Hohlraum der Kugel angeordneten Signalerkennungs- und Ausgabeeinheit auf. Die Signalerkennungseinheit ist eingerichtet zur Erzeugung eines einer Benutzereingabe entsprechenden Signals, das mittels der Ausgabeeinheit über eine Schnittstelle ausgegeben wird.

Aus der EP 0 983035 A2 ist eine elektromechanische Bedieneinrichtung zur Verwendung in Fahrzeugen bekannt, bei dem durch Kippen eines Bedienungshebels ein Stator und ein Rotor relativ zueinander neigbar sind. Der mit dem Rotor verbundene Bedienhebel ist in einem den Stator umfassenden Gehäuse über ein Gelenk gelagert.

Die US 2016/0018843 A1 offenbart einen Joystick, dessen Bedienteil magnetisch gelagert ist. Das Bedienteil umfasst ein magnetisches Kugelelement, auf das ein mittels Elektromagneten einer Auslenkung des Bedienelementes entsprechendes, als haptische Rückmeldung wirkendes Drehmoment aufgebracht werden kann.

Die US 2017/0322585 A1 offenbart eine Ein- und Ausgabevorrichtung geeignet zur Steuerung von Fahrzeugfunktionen mit einem Bedienelement, das in einem Gehäuse aufliegenden Haltern gelagert ist. An dem Bedienelement sind Magnete angeordnet, die mit in dem Gehäuse angeordneten Elektromagneten zusammenwirken. Eine Bestromung der Elektromagneten bewirkt eine Anziehung der Magnete des Bedienelements, wodurch eine Kraft auf das im dem Gehäuse gelagerten Bedienelement aufgebracht wird.

Aus der KR 2017 01290 12 A ist eine Anordnung bekannt, bei der ein Bedienobjekt über ein geregeltes Magnetfeld in einem Schwebezustand gehalten wird. Eine Sensorik erfasst dabei eine durch einen Nutzer bewirkte Auslenkung des Bedienobjekts in dem Magnetfeld.

Die Aufgabe der hier vorliegenden Erfindung besteht nun darin, eine verbesserte Steuereinrichtung zur Steuerung von Fahrzeugfunktionen sowie ein verbessertes Verfahren zur Steuerung anzugeben. Insbesondere soll die Steuereinrichtung zusätzliche Freiheitsgrade hinsichtlich ihrer Betätigung als auch eine verbesserte Handhabbarkeit ermöglichen.

Erfindungsgemäß wird diese Aufgabe durch eine Steuereinrichtung mit den Merkmalen im Anspruch 1 gelöst. Ein Verfahren zur Steuerung von Fahrzeugfunktionen mit einer solchen Steuereinrichtung ist im Anspruch 8 angegeben. Sowohl bei der Steuereinrichtung als auch bei dem Verfahren ergeben sich vorteilhafte Ausgestaltungen und Weiterbildungen aus den hiervon jeweils abhängigen Unteransprüchen.

Die erfindungsgemäße Steuereinrichtung zur Steuerung von Fahrzeugfunktionen umfasst ein weitgehend ortsfestes jedoch bewegliches Objekt. Dieses Objekt kann ähnlich wie ein Bedienknopf, ein Joystick oder dergleichen von einer Person zur Steuerung aktiv betätigt werden. Das Objekt ist nun als ein über ein geregeltes Magnetfeld schwebendes Objekt ausgebildet. Dabei ist erfindungsgemäß eine Sensorik zur Erfassung der aktiven Betätigung in Form einer Auslenkung des Objekts aus seiner Neutrallage durch die Person vorgesehen. Die Steuereinrichtung nutzt dabei die Technik der sogenannten Levitation, um ein Objekt, gemäß einer vorteilhaften Weiterbildung der erfindungsgemäßen Steuereinrichtung eine Kugel, mit einem magnetisierbaren Element, z.B. einem Weicheisenkern, in einem mit Hilfe eines geschlossenen Regelkreises geregelten Magnetfeld frei schweben zu lassen. Dieses Objekt ermöglicht dann durch eine Auslenkung aus seiner Neutrallage durch die Person, welche die Fahrzeugfunktion auslösen will, eine vielfältige Steuerung, da das Objekt in alle Raumrichtungen ausgelenkt und um jede beliebige Raumachse in seinem Winkel verdreht werden kann. Dadurch ist eine sehr große Zahl von unterschiedlichen Betätigungen möglich, welche einer die Steuereinrichtung nutzenden Person nach kurzer Übung eine außerordentlich große Bandbreite von einfach, intuitiv und effizient zu bedienenden Steuerungsmöglichkeiten zur Verfügung stellt.

Bei der Steuereinrichtung ist dabei vorgesehen, dass die Sensorik mit der Regelung des Magnetfeldes verbunden ist, und zwar in der Art, dass das Magnetfeld das Objekt im Falle einer Auslenkung in die Neutrallage zurückstellt. Diese Rückstellung des Objekts in die Neutrallage ermöglicht einerseits eine immer gleiche Ausgangssituation und erlaubt andererseits eine der Bewegung des Objekts durch die Person entgegengerichtete Kraft, weil die Steuerung permanent versucht, das Objekt in die Ausgangslage zurückzubewegen. Die einer Auslenkung durch einen Nutzer entgegenwirkende Kraft kann dabei je nach Funktion durch entsprechende Bestromung der Elektromagneten des geregelten Magnetfelds unterschiedlich eingestellt werden. Weiter lässt sich einfach und effizient ein sensorisches bzw. haptisches Feedback erzeugen, um der die Steuereinrichtung nutzenden Person anzuzeigen, dass die Bewegung erkannt worden ist, und die entsprechende Fahrzeugfunktion oder der von ihr gewünschte Steuerbefehl damit umgesetzt werden kann. Zur Erzeugung von Druckpunkten oder Schaltmarken kann über das Magnetfeld beispielsweise eingestellt werden, dass die Kraft bis zu einer vorgegebenen Auslenkung ansteigt und dann wieder abfällt. Die Sensorik der Steuereinrichtung kann dabei in beliebiger Art ausgebildet sein. Sie kann beispielsweise über eine Innenraumkamera, eine speziell auf das Objekt gerichtete Kamera, welche jeweils als Mono- oder Stereokamera ausgebildet sein können, realisiert werden. Zusätzlich können mehrere Kameras oder andersartige Sensoren, beispielsweise Abstandssensoren auf der Basis von Ultraschall Anwendung finden Weiter ist erfindungsgemäß bei der Steuereinrichtung vorgesehen, dass Daten von Fahrzeugsensoren verarbeitet werden, welche zumindest Beschleunigungsänderungen des Fahrzeugs umfassen, wobei die Regelung des Magnetfeldes dazu eingerichtet ist, das Objekt unabhängig von solchen Beschleunigungsänderungen des Fahrzeugs in seiner Neutrallage zu halten. Damit ist es möglich, dass auch bei Fahrmanövern mit starken Beschleunigungen das levitierte Objekt in seiner Neutrallage gehalten wird, und nicht aufgrund von auftretenden Trägheitskräften seine prinzipielle Position verlässt. Dies dient einerseits dem Komfort der das Fahrzeug nutzenden und die Steuereinrichtung nutzenden Person und andererseits können so Bewegungen, welche fälschlicherweise als Steuerbewegungen interpretiert werden könnten, unterbunden werden.

Wie bereits erwähnt kann gemäß einer sehr vorteilhaften Weiterbildung der erfindungsgemäßen Steuereinrichtung das Objekt als Kugel ausgebildet sein. Dabei können gemäß einer vorteilhaften Weiterbildung der Erfindung in dem Objekt Sensoren integriert werden. Solche Sensoren können insbesondere berührungssensitive Sensoren oder Oberflächen sein, um noch mehr Freiheitsgrade bei der Erfassung von gewünschten Steuerungseingaben durch die Person zu erreichen. Außerdem können Beschleunigungssensoren und/oder Gyrosensoren vorgesehen werden, um Drehbewegungen des Objekts leichter zu detektieren und/oder auf das Objekt wirkende Beschleunigungen direkt als Maß für die gewünschte Eingabe durch die Person nutzen zu können. Die erfassbaren Beschleunigungen des Objekts können dabei mit den Beschleunigungssensoren, sofern diese eingesetzt sind, in dem Objekt erkannt werden. Diese lassen sich dann direkt als Steuersignale nutzen, ohne dass diese erst aufwändig aus einer Translationsbewegung abgeleitet werden müssen.

Das Objekt kann bevorzugt, anstelle des magnetisierbaren Elements, einen Permanentmagneten aufweisen oder alternativ dazu selbst magnetisiert sein. Besonders günstig ist es dabei, einen Permanentmagneten in dem Objekt vorzusehen. Gemäß einer außerordentlich günstigen Weiterbildung der erfindungsgemäßen Steuereinrichtung kann dieser Permanentmagnet dabei kardanisch aufgehängt sein. Damit ist es möglich, dass das Objekt sich selbst bezüglich wenigstens zwei, vorzugsweise wenigstens drei Raumrichtungen wieder in eine Neutrallage dreht, also praktisch immer gleich ausgerichtet ist, sodass beispielsweise bei einer Anordnung rechts von einer das Fahrzeug fahrenden Person, im Falle, dass das Fahrzeug mit Linkslenkung ausgestattet ist, auf der rechten Seite berührungssensitive Sensoren angeordnet sind, welche beispielsweise beim Berühren des Objekts im Bereich von Zeigefinger und Mittelfinger liegen, wenn das Objekt in der Art eines Schalthebels von der Person seitlich umfasst wird.

Die Steuereinrichtung kann für verschiedene Fahrzeugfunktionen genutzt werden. Sie ist insbesondere dafür geeignet, eine sensorgestützte Innenraumsteuerung vorzunehmen oder eine Steuerung in Menüs des Multifunktionsgeräts in einem Fahrzeug oder dergleichen. Prinzipiell kann über eine solche Steuereinrichtung jedoch auch eine direkte Steuerung des Fahrzeugs erfolgen, beispielsweise indem die Lenkung oder der Antriebsstrang direkt gesteuert wird, was typischerweise als Steer-by-Wire oder Drive-by-Wire bezeichnet wird. Hierfür ist das erfindungsgemäße Konzept ideal, da durch eine weitgehend intuitive Betätigung des levitierten Objekts eine sehr einfache und effiziente Steuerung einer Vielzahl von Funktionen möglich ist.

Eine solche erfindungsgemäße Steuereinrichtung erlaubt im Gegensatz zu herkömmlichen Steuereinrichtungen ein völlig neuartiges Innenraumkonzept eines Fahrzeugs, da auf aufwändige Elemente, wie sie bisher bekannt und hinsichtlich ihrer Positionierung im Fahrzeuginnenraum weitgehend vorgegeben sind, beispielsweise ein Lenkrad oder Pedale, bei Einsatz einer oder mehrerer der Steuereinrichtungen gemäß der Erfindung verzichtet werden kann. Demgemäß ist die Steuereinrichtung geeignet bei einem ohne Lenkrad oder Pedale ausgerüsteten autonom fahrenden Fahrzeug dennoch ein Fahrtrichtungs- oder Fahrstreckenwunsch einzugeben. Beispielsweise kann durch leichten Druck auf die Kugel in einer Richtung quer zu Fahrtrichtung dem autonom fahrenden Fahrzeug angezeigt werden, dass an der nächsten Kreuzung in Druckrichtung abgebogen werden soll. Entsprechend kann durch einen Druck in oder entgegen der Fahrzeuglängsrichtung das Fahrzeug zum Anfahren oder Anhalten gebracht werden.

Das erfindungsgemäße Verfahren zur Steuerung von Fahrzeugfunktionen mit einer solchen Steuereinrichtung sieht es dabei vor, dass eine Auslenkung des Objekts aus der Neutrallage durch eine das Objekt berührende Person erkannt und entsprechend der Richtung, der Größe und/oder der Art der Auslenkung in Steuerbefehle in eine Fahrzeugfunktion umgesetzt wird. Wie bereits erwähnt sind dabei eine Vielzahl von verschiedenen Betätigungsmöglichkeiten gegeben, da Beschleunigungen, Richtungen, Größen der Auslenkung, Drehbewegungen und dergleichen möglich sind und erfasst werden können, sodass eine neuartige aber intuitive Steuerung und Auslösung von Steuerbefehlen und Fahrzeugfunktionen möglich wird.

Gemäß einer vorteilhaften Weiterbildung des Verfahrens ist es dabei vorgesehen, dass das Objekt im Falle einer Auslenkung durch die Regelung des Magnetfeldes und eine eigene Magnetisierung oder einen Permanentmagneten in seine Neutrallage zurückgestellt wird. Damit wird eine gegen die Auslenkung wirkende Kraft erreicht. Dies führt einerseits dazu, dass das Objekt weitgehend ortsfest bleibt, also immer in der erwarteten Position steht und immer in der gleichen Art und Weise betätigt werden kann. Außerdem erlaubt die Rückstellung auch eine Krafteinwirkung auf die Hand der Person, welche das Objekt zu Steuerungszwecken bedient, sodass diese unmittelbar ein haptisches bzw. sensorisches Feedback auf ihre Eingaben erfährt, was die Funktionssicherheit erhöht und das Vertrauen der Person in die Steuereinrichtung steigert.

Weitere vorteilhafte Ausgestaltungen der erfindungsgemäßen Steuereinrichtung sowie des Verfahrens zur Steuerung von Fahrzeugfunktionen mit dieser Steuereinrichtung ergeben sich auch aus dem Ausführungsbeispiel, welches nachfolgend unter Bezugnahme auf die Figuren näher dargestellt ist.

Dabei zeigen:
- Fig. 1: eine schematische Ansicht der Funktionsweise der erfindungsgemäßen Steuereinrichtung;
- Fig. 2: eine weitere Ansicht zur Darstellung einer Funktionsweise der erfindungsgemäßen Steuereinrichtung;
- Fig. 3: eine schematische Darstellung der Funktionsweise und Funktionsmöglichkeit der erfindungsgemäßen Steuereinrichtung; und
- Fig. 4: eine Prinzipansicht eines Fahrzeuginnenraums mit einer möglichen Anordnung der erfindungsgemäßen Steuereinrichtung.

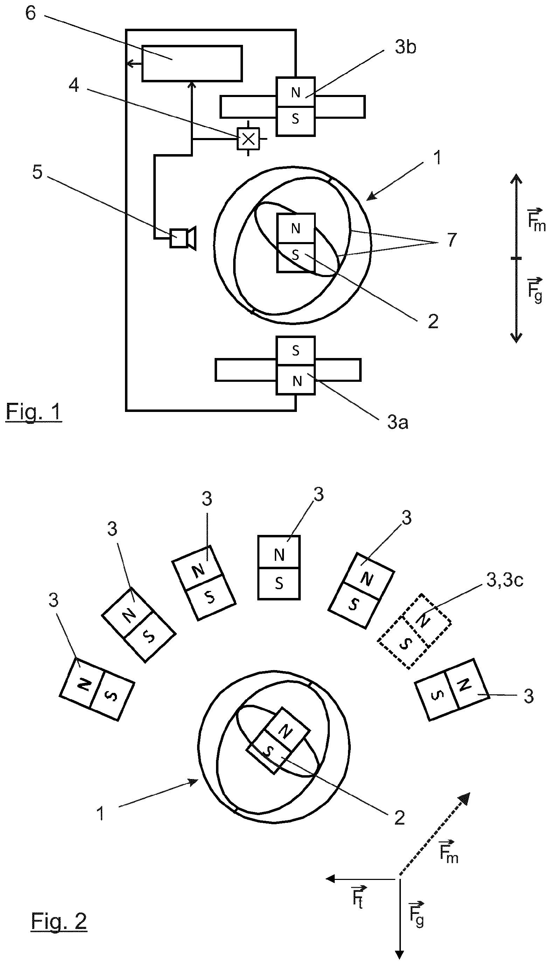

Geschlossene Regelkreise erlauben die sogenannte Levitation eines Dauermagneten oder auch ferromagnetischer Stoffe in einem variablen geregelten Magnetfeld. Dies bedeutet also, dass die Gewichtskraft des Objekts durch eine magnetische Kraft ausgeglichen wird. In der Darstellung der Figur 1 ist ein solches Objekt 1 in Form einer Kugel dargestellt. Ein Permanentmagnet 2, welcher häufig auch als Dauermagnet bezeichnet wird, befindet sich in dem Objekt 1. Im hier dargestellten Ausführungsbeispiel befindet sich oberhalb und beispielsweise auch unterhalb jeweils ein Elektromagnet 3a, 3b. Der Elektromagnet 3a in der Darstellung der Figur 1 unterhalb des Objekts 1 ist dabei so ausgerichtet, dass er mit demselben Pol zu dem Permanentmagnet 2 in dem Objekt 1 zeigt, sodass es hier zu einer Abstoßung kommt. Der Elektromagnet 3b oberhalb des Objekts 1 ist so gepolt, dass er den Permanentmagnet 2 im Objekt 1 entsprechend anzieht. Die magnetische Abstoßungskraft und/oder Anziehungskraft, welche insgesamt als magnetische Kraft Fₘ dargestellt ist, wirkt damit der Gewichtskraft F_{g} des Objekts 1 entgegen und lässt dieses Objekt also schweben bzw. levitieren. Die magnetischen Kräfte Fₘ werden dabei durch die konstante magnetische Feldstärke des Permanentmagneten 2, durch den Abstand zwischen dem Permanentmagneten 2 und den Elektromagneten 3a, 3b sowie durch den Stromfluss durch die Elektromagneten 3a, 3b und die damit erzeugte variable magnetische Feldstärke der Elektromagneten 3a, 3b bestimmt. Sensoren wie beispielsweise ein Hall-Sensor 4 zur Messung der elektrischen Feldstärke sowie eine Kamera 5 sowie gegebenenfalls weitere Sensoren, beispielsweise Ultraschallsensoren zur Erfassung eines Abstands oder dergleichen, ermöglichen es dann, die Lage des Permanentmagneten 2 und damit die Lage des Objekts 1 relativ zu den Elektromagneten 3a, 3b zu bestimmen und den Stromfluss durch die Elektromagneten 3a, 3b über ein Steuergerät 6 so zu regeln, dass die Levitation, also das Schweben des Objekts 1, aufrechterhalten wird.

Der Permanentmagnet 2 kann dabei vorzugsweise in dem Objekt 1 über eine kardanische Lagerung 7, welche hier schematisch angedeutet ist, aufgenommen werden. Damit ist es möglich, die Ausrichtung der Pole (N, S) des Permanentmagneten 2 bei einer Drehung des Objekts 1 nicht zu verändern. Das Objekt 1, also hier die Kugel mit dem kardanisch gelagerten Permanentmagneten 2, kann also durch den regelbaren Elektromagneten 3a und/oder 3b ober- und/oder unterhalb des Objekts in Levitation gehalten werden, wobei der Abstand zwischen dem Elektromagneten 3a, 3b und dem Objekt 1 durch den Stromfluss zu den Elektromagneten 3a, 3b regelbar ist und die Gewichtskraft F_{g} durch die magnetischen Kräfte Fₘ kompensiert wird.

Zusätzliche Elektromagneten 3, beispielsweise oberhalb des Objekts 1, welche nicht senkrecht über dem Objekt 1 positioniert sind, erlauben es tangentiale Kräfte auf das Objekt 1 zu kompensieren. In der Darstellung der Figur 2 sind solche Elektromagneten, welche hier ganz allgemein mit 3 bezeichnet sind, entsprechend angedeutet. Dadurch können insbesondere bei Fahrzeugbewegungen, also beispielsweise Beschleunigungen, auftretenden Kräfte oder dergleichen, durch das Steuergerät 6 die zusätzlichen Elektromagneten 3 in der Umgebung des Objekts 1 auf Basis dieser gemessenen Fahrzeugbewegungen und/oder auch auf der Basis von geplanten Fahrzeugbewegungen, welche beispielsweise zu erwarten sind, weil eine Lenkbewegung beginnt, kompensiert werden. Damit wird der Schwebezustand der Objekts 1 zuverlässig aufrechterhalten und das Objekt 1 bleibt auch bei einer Bewegung des Fahrzeugs mit auftretenden Längs- bzw. Querbeschleunigungen zuverlässig in seiner geplanten Position, welche auch als Neutrallage bezeichnet werden kann.

In der Darstellung der Figur 2 ist dafür beispielhaft wiederum die Gewichtskraft F_{g} und senkrecht dazu eine Tangentialkraft Fₜ dargestellt. Beide Kräfte, bei welchen es sich jeweils um Vektoren handelt, müssen nun also durch die Magnetkraft Fₘ entsprechend ausgeglichen werden. Diese ist in der Darstellung der Figur 2 gestrichelt als Gegenkraft zur Vektoraddition der Tangentialkraft Fₜ und der Gewichtskraft F_{g} des Objekts 1 dargestellt. Diese Vektoraddition der Kräfte führt dann zu der magnetischen Kraft Fₘ, welche entsprechend ausgeglichen werden muss, hier durch den mit 3c bezeichneten und ebenso wie den Kraftpfeil gestrichelt markierten Elektromagneten 3.

Wie bereits erwähnt wird die Position des Objekts 1, und hier die Position des Objekts 1 im Raum, also dessen 3D-Position, permanent bestimmt und zur Regelung der Elektromagneten 3 verwendet, um die Levitation aufrechtzuerhalten. Zur Bestimmung der 3D-Position werden dabei externe Sensoren eingesetzt, beispielsweise die bereits erwähnte Kamera 5, nicht dargestellte Ultraschallsensoren oder dergleichen. Außerdem kann eine aktive Messung durchgeführt werden. Hierzu werden ortbare Signale aus dem Objekt 1 heraus gesendet und extern detektiert und ausgewertet. Alternativ oder ergänzend kann auch ein ortbares externes Positionssignal in das Objekt 1 gesendet und im Objekt 1 ausgewertet werden.

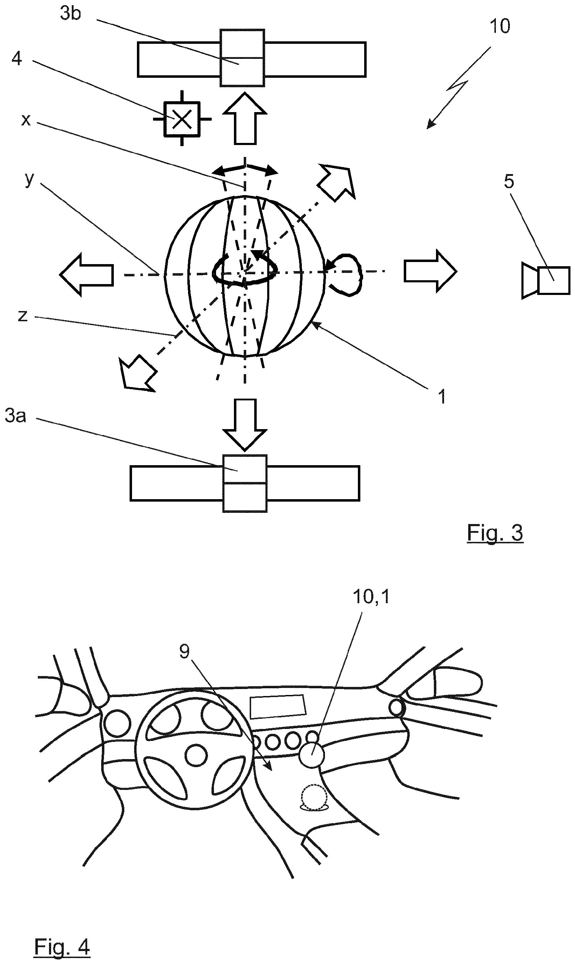

Der ganze Aufbau dient nun als eine Steuereinrichtung 10, mit welcher eine hier nicht dargestellte Person, welche ein Fahrzeug nutzt, Fahrzeugfunktionen steuern kann. Hierfür berührt die Person das Objekt 1 und bewegt dieses. In der Darstellung der Figur 3 sind nun die Möglichkeiten, welche eine Person hat, das Objekt 1 entsprechend zu bewegen, schematisch angedeutet. Neben dem Objekt 1, hier einer Kugel, sind dabei rein beispielhaft die beiden Permanentmagneten 3a, 3b sowie der Hall-Sensor 4 entsprechend der Darstellung in Figur 1 nochmals dargestellt. Seitlich rechts von dem Objekt 1 befindet sich die Kamera 5 als weiterer Sensor, wobei der Aufbau nicht auf diese Art der Sensoren beschränkt sein muss. Nun gibt es verschiedene Möglichkeiten der Bewegung. Mit dem in der Mitte des Objekts 1 befindlichen Pfeil ist eine Gierbewegung um die in senkrechte Richtung verlaufende Hochachse x dargestellt. Man spricht in diesem Fall von einem Gieren um die Hochachse x. Das Gieren wird dabei im englischen Sprachraum als yaw bezeichnet. Senkrecht zu dieser Hochachse x verläuft in der y Richtung gemäß der Darstellung in Figur 3 die Querachse y. Der um die Querachse y verlaufende Pfeil rechts des Objekts 1 deutet dabei ein sogenanntes Nicken um diese Querachse y an. Dieses Nicken, welches im englischen Sprachraum auch als pitch bezeichnet wird, stellt eine weitere Art der Rotation um eine vorgegebene Achse dar. Daneben kann eine Bewegung um die in der z Richtung verlaufende Längsachse erfolgen. Ein Rollen um die Längsachse z ist dabei durch die Pfeile und die gestrichelten um die Längsachse z verdrehten Positionen der Hochachse x entsprechend angedeutet. Dieses Rollen wird im Englischen als roll bezeichnet.

Neben diese auf der Drehung des Objekts 1 basierenden Bewegungen sind selbstverständlich in alle drei Raumrichtungen, also entlang der Hochachse x, der Querachse y und der Längsachse z, translatorische Bewegungen möglich, welche durch die Pfeile hier ebenfalls benachbart zu den jeweiligen Achsen x, y, z in dem Objekt 1 bzw. neben dem Objekt 1 dargestellt sind. Bei einer solchen translatorischen Auslenkung des Objekts 1, beispielsweise in vertikaler Richtung, also entlang der Hochachse x nach oben oder nach unten, stellt der geschlossene Regelkreis das magnetische Feld der Elektromagneten 3a, 3b so ein, dass die Summe der Gewichtskraft F_{g} des Objekts 1 sowie die von der Steuereinrichtung 10 nutzenden Person für die translatorische Auslenkung des Objekts 1 aufgebrachte Kraft nun zusätzlich kompensiert wird. Die die Steuereinrichtung 10 nutzende Person spürt also eine Gegenkraft bei der translatorischen Bewegung des Objekts 1 und erhält durch das Objekt 1 so ein sensorisches Feedback auf die Steuerungseingabe. Bei einer translatorischen Auslenkung des Objekts 1 in einer horizontalen Ebene, also entlang der Querachse y und/oder der Längsachse z, durch die Person, wählt der geschlossene Regelkreis einen in dem entsprechenden Winkel positionierten Elektromagneten 3 aus und stellt dessen elektromagnetisches Feld so ein, dass die Summe der Gewichtskraft F_{g} des Objekts 1 sowie die vom Nutzer für die translatorische Auslenkung des Objekts 1 aufgebrachte Kraft wiederum kompensiert wird, sodass die die Steuereinrichtung 10 nutzende Person auch in diesem Fall eine Gegenkraft und damit ein sensorisches Feedback spürt. Vergleichbares gilt auch für Drehbewegungen an dem Objekt, also für das Gieren, Nicken oder Rollen.

Beschleunigungen des Objekts können darüber hinaus mit Beschleunigungssensoren in dem Objekt 1 erkannt werden, wobei diese Sensoren hier nicht dargestellt sind. Auch sie können direkt in Steuersignale umgewandelt werden, ohne dass die Beschleunigung erst kompliziert aus der Translationsbewegung abgeleitet werden muss. Des Weiteren kann das Objekt 1 ein Gyroskop enthalten und/oder Messungen der Position der kardanischen Aufhängung 7 können durchgeführt werden, um so die entsprechenden Drehbewegungen um alle drei Achsen, also die Hoch-, Quer- und/oder Längsachse, zu ermitteln. Wird nun das Objekt 1 von der die Steuereinrichtung 10 nutzenden Person gedreht, erhält der Elektromagnet vorteilhafterweise wiederum den Schwebezustand aufrecht und wirkt der Positionsveränderung entsprechend entgegen, sodass einerseits ein Steuersignal generiert wird und andererseits auch hier ein sensorisches Feedback vom Objekt 1 erreicht werden kann.

Somit lassen sich alle sechs Freiheitsgrade des schwebenden Objekts 1, also alle drei Raumrichtungen und alle drei Drehwinkel, sowie weitere optionale Signale, beispielsweise Beschleunigung, Druck auf das Objekt über Drucksensoren, eine Berührung des Objekts über Berührungssensoren, beispielsweise kapazitive Sensoren oder dergleichen, erfassen. All dies kann zur Steuerung diverser Funktionen in dem Fahrzeug Verwendung finden. Die Steuersignale aus dem Objekt werden dabei vorzugsweise kabellos, über Schleifkontakte und/oder eine geeignete Kabelanordnung zu dem in Figur 1 dargestellten Steuergerät 6 übermittelt und dort entsprechend verarbeitet. Ebenso werden dort die extern aufgenommenen Informationen der Sensorik, beispielsweise des Hall-Sensors 4 und der Kamera 5 sowie gegebenenfalls weiterer hier nicht dargestellter Ultraschallsensoren, verarbeitet und in die entsprechenden Signale umgesetzt, einerseits um die Levitation des Objekts 1 in der gewünschten Art und Weise aufrechtzuerhalten und andererseits um durch die Manipulation der Orientierung und Lage des schwebenden Objekts 1 die von der Person gewollten Steuersignale zu generieren und an eine Fahrzeugsteuerung weiterzugeben.

Die Übertragung von Steuersignalen in elektronischer Form in dem Fahrzeug, beispielsweise Steer-by-Wire oder Drive-by-Wire, ermöglicht solche innovativen Steuereinrichtungen 10, ohne eine physikalische Verbindung zwischen dem Steuereingabegerät und dem Aktor, also beispielsweise einem Lenkrad und der Lenkung. Damit ist es nun möglich, über die hier erläuterte Steuereinrichtung 10 und an die Fahrzeugsteuerung weitergegebenen Steuersignale verschiedene Funktionen des Fahrzeugs anzusteuern. Dies kann beispielsweise die bereits angesprochene Lenkung oder eine Steuerung des Antriebsstrangs sein. So könnte beispielsweise die Rotation des Objekts 1 um die Querachse y analog zur Beschleunigungsregelung bei einem Motorrad zur Beschleunigung des Fahrzeugs führen, während die Bewegung um die Hochachse x zur Steuerung der Lenkung genutzt werden kann. Allgemein lasen sich vielfältige Ausgestaltungen und Verknüpfungen der Manipulation der Orientierung und Lage des schwebenden Objekts 1 vorstellen, um die Fahrzeugsteuerung zu bündeln. Dabei ist eine sehr intuitive Betätigung des Objekts 1 für viele Steuerungsaufgaben möglich. Neben der Beschleunigung und dem Bremsen sowie dem Lenken sind auch weitere Funktionen wie beispielsweise ein manueller Gangwechsel, die Betätigung eines Blinkers oder dergleichen einfach und effizient umsetzbar. Dies gilt insbesondere für Fahrzeuge, welche autonom fahren, beispielsweise auf Level 5, und daher keine oder, beispielsweise bei Level 4, nur zeitweise Eingabegeräte benötigen. Eine solche levitierende Kugel anstellte eines herkömmlichen starr verbauten Steuereingabegeräts würde dabei vollständig ausreichen und erlaubt eine hohe gestalterische Freiheit beim Design des Fahrzeuginnenraums, ohne den Nutzraum für die in dem Fahrzeug als Passagier mitfahrenden Personen unnötig einzuschränken.

Ein weiteres Beispiel zur Nutzung einer Steuereinrichtung 10 dieser Art zur Eingabe von Fahrzeugfunktionen liegt beispielsweise auch darin, diese für eine sensorgestützte Innenraumsteuerung zu verwenden. Sie kann damit beispielsweise, wie es in der Darstellung der Figur 4 zu erkennen ist, im Bereich einer Mittelkonsole 9 des Fahrzeugs angeordnet werden und erlaubt dort, anstelle eines bisherigen Joysticks die Steuerung zahlreicher Aufgaben. So lassen sich beispielsweise ambientes Innenraumlicht, eine Innenraumbeduftung oder dergleichen mit der zwischen den Vordersitzen des Fahrzeugs im Bereich der Mittelkonsole schwebenden Kugel als Objekt 1 steuern. Ein weiterer Punkt kann darin liegen, dass die Steuereinrichtung 10 mit dem Objekt 1 auch als Diebstahlschutz dienen kann. Eine Bedienung des Fahrzeugs ohne das Objekt 1 kann dabei beispielsweise mittels einer dem Objekt 1 zugeordneten Codierung unterbunden werden. Dieses kann, wenn es beispielsweise als kleinere Kugel ausgebildet ist, jedoch unabhängig vom Fahrzeug transportiert werden und kann so von einer das Fahrzeug nutzenden Person quasi ständig mitgeführt werden. Versucht eine andere Person nun das Fahrzeug zu nutzen, ist dies aufgrund des fehlenden Objekts 1 so nicht möglich.

Abschließend kann noch angemerkt werden, dass für den Fall der Nichtnutzung der Steuereinrichtung 10 das Objekt 1 aus dem Bereich, in dem es für die Steuerung besonders gut zugänglich ist, abgesenkt werden kann. So kann es beispielsweise, wie es in der Darstellung der Figur 4 angedeutet ist, von seiner mit durchgezogener Linie dargestellten Position während der aktiven Nutzung des Objekts 1 in der Steuereinrichtung 10 auf die in gestrichelter Position dargestellte Ablageposition auf der Oberfläche der Mittelkonsole 9 verbracht werden, um so für den Fall, dass das Objekt 1 nicht benötigt wird, die Möglichkeit zu bieten, das Objekt 1 platzsparend im Innenraum abzulegen. Mit einem Einschalten des Magnetfelds durch eine Aktivierung der Elektromagneten 3 lässt es sich dann bei Bedarf wieder in die für die Steuerung geeignete, gemäß einer vorteilhaften Weiterbildung durch den Nutzer individuell einstellbare Position bzw. Höhe, verbringen.

## Patentansprüche

1. Steuereinrichtung (10) zur Steuerung von Fahrzeugfunktionen mit einem weitgehend ortfesten beweglichen Objekt (1), welches von einer Person zur Steuerung aktiv betätigbar ist,
das Objekt (1) als über ein geregeltes Magnetfeld schwebendes Objekt (1) ausgebildet ist, wobei eine Sensorik (4, 5) zur Erfassung der aktiven Betätigung in Form einer Auslenkung des Objekts (1) aus seiner Neutrallage durch die Person vorgesehen ist,
**dadurch gekennzeichnet, dass**
die Sensorik (4, 5) mit der Regelung des Magnetfelds verbunden ist, welche derart eingerichtet ist, dass das Magnetfeld das Objekt (1) im Falle einer Auslenkung in dessen Neutrallage zurückstellt wobei
Daten von Fahrzeugsensoren verarbeitet werden, welche zumindest Beschleunigungsänderungen des Fahrzeugs umfassen, wobei die Regelung des Magnetfeldes dazu eingerichtet ist, das Objekt unabhängig von solchen Beschleunigungsänderungen des Fahrzeugs in seiner Neutrallage zu halten.

2. Steuereinrichtung (10) nach Anspruch 1,
**dadurch gekennzeichnet, dass**
das Objekt (1) als Kugel ausgebildet ist.

3. Steuereinrichtung (10) nach Anspruch 1 oder 2,
**dadurch gekennzeichnet, dass**
das Steuergerät (6) zur Erzeugung von Druckpunkten oder Schaltmarken eines haptischen Feedbacks über das Magnetfeld einstellt, dass die Kraft bis zu einer vorgegebenen Auslenkung ansteigt und dann wieder abfällt.

4. Steuereinrichtung (10) nach einem der Ansprüche 1 bis 3,
**dadurch gekennzeichnet, dass**
das Objekt (1) integrierte Sensoren aufweist.

5. Steuereinrichtung (10) nach Anspruch 4,
**dadurch gekennzeichnet, dass**
die integrierten Sensoren berührungssensitive Sensoren oder Oberflächen, Beschleunigungssensoren und/oder Gyrosensoren umfassen.

6. Steuereinrichtung (10) nach einem der Ansprüche 1 bis 5,
**dadurch gekennzeichnet, dass**
das Objekt (1) selbst magnetisiert ausgebildet ist oder einen Permanentmagneten (2) aufweist.

7. Steuereinrichtung (10) nach Anspruch 6,
**dadurch gekennzeichnet, dass**
der Permanentmagnet (2) in dem Objekt (1) kardanisch gelagert ist.

8. Verfahren zur Steuerung von Fahrzeugfunktionen mit einer Steuereinrichtung (10) nach einem der Ansprüche 1 bis 7,
eine Auslenkung des Objekts (1) aus der Neutrallage durch eine das Objekt (1) berührende Person erkannt und entsprechend der Richtung, Größe und/oder Art der Auslenkung in Steuerbefehle für eine Fahrzeugfunktion umgesetzt wird,
**dadurch gekennzeichnet, dass**
eine Sensorik (4, 5) mit der Regelung des Magnetfelds verbunden ist, wobei mittels dem Magnetfeld das Objekt (1) im Falle einer Auslenkung in dessen Neutrallage zurückgestellt wird und wobei
Daten von Fahrzeugsensoren verarbeitet werden, welche zumindest Beschleunigungsänderungen des Fahrzeugs umfassen, wobei die Regelung des Magnetfeldes dazu eingerichtet ist, dass das Objekt unabhängig von solchen Beschleunigungsänderungen des Fahrzeugs in seiner Neutrallage gehalten wird.

## Claims

1. Control device (10) for controlling vehicle functions with a largely stationary movable object (1), which can be actively actuated by a person for control,
the object (1) is designed as an object (1) floating via a controlled magnetic field, a sensor system (4, 5) being provided for detecting the active actuation in the form of a deflection of the object (1) from its neutral position by the person,
**characterized in that**
the sensor system (4, 5) is connected to the control system of the magnetic field, which control system is configured such that the magnetic field returns the object (1) into its neutral position in the event of a deflection,
data of vehicle sensors being processed which comprise at least acceleration changes of the vehicle, the control system of the magnetic field being configured to keep the object in its neutral position independently of such acceleration changes of the vehicle.

2. Control device (10) according to claim 1,
**characterized in that**
the object (1) is designed as a sphere.

3. Control device (10) according to either claim 1 or claim 2,
**characterized in that**
in order to generate pressure points or switching marks of a haptic feedback via the magnetic field, the control device (6) sets that the force rises up to a predetermined deflection and then drops again.

4. Control device (10) according to any of claims 1 to 3,
**characterized in that**
the object (1) has integrated sensors.

5. Control device (10) according to claim 4,
**characterized in that**
the integrated sensors comprise touch-sensitive sensors or surfaces, acceleration sensors and/or gyro sensors.

6. Control device (10) according to any of claims 1 to 5,
**characterized in that**
the object (1) is self-magnetized or has a permanent magnet (2).

7. Control device (10) according to claim 6,
**characterized in that**
the permanent magnet (2) is mounted in the object (1) on gimbals.

8. Method for controlling vehicle functions using a control device (10) according to any of claims 1 to 7,
deflection of the object (1) from the neutral position by a person touching the object (1) is detected and converted in accordance with the direction, size and/or type of deflection into control commands for a vehicle function,
**characterized in that**
a sensor system (4, 5) is connected to the control system of the magnetic field, the object (1) being returned into its neutral position by means of the magnetic field in the event of a deflection, and
data of vehicle sensors being processed which comprise at least acceleration changes of the vehicle, the control system of the magnetic field being configured such that the object is kept in its neutral position independently of such acceleration changes of the vehicle.

## Revendications

1. Dispositif de commande (10) permettant de commander des fonctions de véhicule, comportant un objet (1) mobile largement fixe en termes d'emplacement et qui peut être actionné de manière active par une personne pour la commande,
l'objet (1) est conçu comme un objet (1) en sustentation par l'intermédiaire d'un champ magnétique régulé, dans lequel un système de capteurs (4, 5) est prévu pour la détection de l'actionnement actif sous la forme d'une déviation de l'objet (1) de sa position neutre par la personne,
**caractérisé en ce que**
le système de capteurs (4, 5) est relié à la régulation du champ magnétique, laquelle est configurée de telle sorte que le champ magnétique ramène l'objet (1) dans sa position neutre en cas de déviation, dans lequel
des données sont traitées par des capteurs de véhicule, lesquelles comprennent au moins des variations d'accélération du véhicule, dans lequel la régulation du champ magnétique est configurée pour maintenir l'objet dans sa position neutre indépendamment de telles variations d'accélération du véhicule.

2. Dispositif de commande (10) selon la revendication 1,
**caractérisé en ce que**
l'objet (1) est conçu comme une sphère.

3. Dispositif de commande (10) selon la revendication 1 ou 2,
**caractérisé en ce que**
l'appareil de commande (6) règle par l'intermédiaire du champ magnétique pour la production de points de pression ou de marques de commutation d'un retour haptique, de sorte que la force croît jusqu'à une déviation prédéterminée puis diminue à nouveau.

4. Dispositif de commande (10) selon l'une des revendications 1 à 3,
**caractérisé en ce que**
l'objet (1) présente des capteurs intégrés.

5. Dispositif de commande (10) selon la revendication 4,
**caractérisé en ce que**
les capteurs intégrés comprennent des capteurs ou des surfaces sensibles au toucher, des capteurs d'accélération et/ou des capteurs gyroscopiques.

6. Dispositif de commande (10) selon l'une des revendications 1 à 5,
**caractérisé en ce que**
l'objet (1) est conçu de manière à être lui-même magnétisé ou présente un aimant permanent (2).

7. Dispositif de commande (10) selon la revendication 6,
**caractérisé en ce que**
l'aimant permanent (2) est monté à la cardan dans l'objet (1).

8. Procédé permettant la commande de fonctions de véhicule, comportant un dispositif de commande (10) selon l'une des revendications 1 à 7,
une déviation de l'objet (1) hors de la position neutre est détectée par une personne touchant l'objet (1) et convertie en instructions de commande pour une fonction de véhicule en fonction de la direction, de la taille et/ou du type de la déviation,
**caractérisé en ce que**
un système de capteurs (4, 5) est relié à la régulation du champ magnétique, dans lequel l'objet (1) est ramené dans sa position neutre au moyen du champ magnétique en cas de déviation et dans lequel
des données sont traitées par des capteurs du véhicule, lesquelles comprennent au moins des variations d'accélération du véhicule, dans lequel la régulation du champ magnétique est configurée de sorte que l'objet est maintenu dans sa position neutre indépendamment de telles variations d'accélération du véhicule.
